# EUROPEAN PATENT SPECIFICATION

(11) **EP 4 567 539 B1**
(45) Date of publication and mention of the grant of the patent: **21.10.2026**
(21) Application number: 24217193.2
(22) Date of filing: 03.12.2024
(51) Int. Cl.: G05D 1/242, G05D 1/243, B25J 13/08, B25J 19/02, B62D 57/032, G01C 21/16

(54) **WALKING ROBOT AND POSITION ESTIMATION METHOD THEREOF**
GEHROBOTER UND POSITIONSSCHÄTZUNGSVERFAHREN DAFÜR
ROBOT MARCHEUR ET SON PROCÉDÉ D'ESTIMATION DE POSITION

(30) Priority: 04.12.2023 KR 20230172956; 18.06.2024 KR 20240078852
(43) Date of publication of application: 11.06.2025
(73) Proprietor: Korea Advanced Institute of Science and Technology, Daejeon 34141 (KR)
(72) Inventor: MYUNG, Hyun, 34141 Daejeon (KR); MARSIM, Kevin Christiansen, 34141 Daejeon (KR); OH, Min Ho, 34141 Daejeon (KR); YU, Byeong Ho, 34141 Daejeon (KR); LEE, Seung Jae, 34141 Daejeon (KR)
(74) Representative: M. Zardi & Co S.A.

(56) References cited:
- DAVID WISTH ET AL: "VILENS: Visual, Inertial, Lidar, and Leg Odometry for All-Terrain Legged Robots", ARXIV.ORG, CORNELL UNIVERSITY LIBRARY, 201 OLIN LIBRARY CORNELL UNIVERSITY ITHACA, NY 14853, 21 February 2022 (2022-02-21), XP091155517

## Description

### TECHNICAL FIELD

The present disclosure relates to a walking robot and a pose estimation method. More specifically, a technology capable of accurately estimating the pose of a robot based on the fusion of a three-dimensional (3D) LiDAR, an image, joint, and an inertial sensors in a strong coupling method considering the mutual connectivity of features between the modules.

### BACKGROUND ART

Recent robot pose estimation technologies, as discussed in related works, estimate the pose of a robot using a camera and an inertial measurement unit (IMU). However, these methods face challenges in accurately estimating scale due to the structural limitations of the camera. Consequently, the accuracy of the estimated pose is low due to the limited quantity and quality of visual features extracted from the data provided by the camera and IMU. The fusion of exteroceptive and proprioceptive sensors has also been explored, but they still have estimation errors due to continuous accumulation of incorrect features when used in environments where specific sensor data is unsuitable.

Pose estimation technologies for walking robots, especially when travelling for long distances of 1 km or more, have difficulty in accurately estimating its own position. Non-linear movements, such as hard impact or foot slippage, during walking limits the generation of reliable 3D maps.

On the other hand, robot pose estimation technologies that rely on heterogeneous sensor fusion face stability issues due to pose differences between the visual and the 3D distance sensors.

### [Prior Art Document]

### [Patent Document]

(Patent Document 1) KR 10-2018-0076815 A (2018.07.06.)
DAVID WISTH ET AL, "VILENS: Visual, Inertial, Lidar, and Leg Odometry for All-Terrain Legged Robots", ARXIV.ORG, CORNELL UNIVERSITY LIBRARY, 201 OLIN LIBRARY CORNELL UNIVERSITY ITHACA, NY 14853 discloses robot control method of state of the art.

### DISCLOSURE

### Technical Problem

The present disclosure is directed to providing accurate and robust long-term pose estimation technology for a walking robot based on the fusion of LiDAR, image, inertial, and joint sensors.

In addition, the present disclosure is directed to providing a pose estimation method for a walking robot based on sensor fusion by calculating the distribution of grouped LiDAR data from a super pixel-based method and a three-dimensional (3D) planar model to fuse LiDAR data distribution and the 3D planar modelling with tracked visual features.

In addition, the present disclosure is directed to providing a pose estimation method of a walking robot capable of preventing pose estimation divergence in environment where geometrical features are weak through a LiDAR-based sliding window-based optimization technique.

The problems of the present disclosure are not limited to the above-mentioned problems. Other technical problems not mentioned will be clearly understood from the following method description.

### Technical Solution

According to an embodiment of the present disclosure, there is provided a pose estimation method of a walking robot including calculating a kinematic factor of the walking robot comprising positions and velocities of a leg and foot of the walking robot considering data measured by an inertial measurement unit and a joint sensor mounted on the walking robot while the walking robot is moving and kinetic dynamics; obtaining point cloud data with respect to a space where the walking robot is located by using a LiDAR sensor mounted on the walking robot; and obtaining image data with respect to the space where the walking robot is located by using an image sensor mounted on the walking robot, characterized by performing a data fusion operation comprising independently optimizing: (i) a LiDAR-inertial-kinematic odometry factor, LIKO factor, by fusing the kinematic factor with feature data of the point cloud data of the LiDAR sensor, wherein the feature data are generated by sliding window-based point cloud optimization over a plurality of LiDAR frames; and (ii) a visual-inertial-kinematic odometry factor, VIKO factor, by fusing the kinematic factor with feature data of the image data of the image sensor, wherein the VIKO factor includes a depth consistency factor calculated based on superpixel-based classification of the image data and projection of the point cloud data of the LiDAR sensor onto an image frame to correct depth information of visual features, and estimating the pose of the walking robot by subsequently fusing the independently optimized LIKO factor and the VIKO factor.

### Advantageous Effects

According to the walking robot and the pose estimation method thereof of an embodiment of the present disclosure, accurate pose estimation of the walking robot is possible by using a strong coupling method considering the connectivity of features of mutual modules of sensors, which are robust to long-distance walking of the walking robot, that is, a LiDAR, an image sensor, an inertial sensor, a joint sensor, etc.

In addition, more precise pose estimation is possible by calculating the distribution of LiDAR data grouped in a super pixel-based method and a three-dimensional (3D) planar model and reducing errors even for long-distance walking of the walking robot and fusing the distribution of LiDAR data and the 3D planar model with visual features.

In addition, it is possible to prevent the possibility of divergence of data in an environment where features are weak through a sliding window-based optimization technique of the LiDAR data.

The effects of the present disclosure are not limited to the above-mentioned effects, and other effects not mentioned will be clearly understood by one of ordinary skill in the art from the following description.

### DESCRIPTION OF DRAWINGS

FIG. 1 is a diagram illustrating a walking robot and sensors mounted thereon according to an embodiment of the present disclosure.
FIG. 2 is a block diagram illustrating a configuration of a walking robot according to an embodiment of the present disclosure.
FIG. 3 is a diagram for describing a pose estimation process of a walking robot according to an embodiment of the present disclosure.
FIG. 4 is a diagram illustrating a process of calculating a feature consistency factor.
FIG. 5 is a diagram illustrating test data related to the accuracy of pose estimation according to a pose estimation method of a walking robot according to an embodiment of the present disclosure and other methods.
FIG. 6 is a diagram illustrating a test result of pose estimation on a map according to a pose estimation method of a walking robot according to an embodiment of the present disclosure and other methods.
FIG. 7 is a flowchart illustrating a pose estimation method of a walking robot according to an embodiment of the present disclosure.

### MODE FOR INVENTION

Hereinafter, embodiments of the present disclosure will be described in detail with reference to the accompanying drawings such that one of ordinary skill in the art may easily practice the embodiments. However, the present disclosure may be implemented in different ways and is not limited to the embodiments described herein. And, in order to clearly explain the embodiment of the present disclosure in the drawings, parts that are not related to the description are omitted.

The terms used herein are only used to describe specific embodiments, and are not intended to limit the present disclosure. A singular expression may include a plural expression, unless the context clearly indicates otherwise.

In the present specification, it should be understood that the terms such as "comprises", "have" or "include" are merely intended to indicate that features, numbers, steps, operations, components, parts, or combinations thereof are present, and are not intended to exclude the possibility that one or more other features, numbers, steps, operations, components, parts, or combinations thereof will be present or added.

In addition, components described in the embodiments of the present disclosure are independently shown in order to indicate different characteristic functions, but this does not mean that each of the components includes a separate hardware or software component. That is, the components are arranged and included separately for convenience of description, and at least two of the components may be integrated into a single component or one component may be divided into a plurality of components to perform functions. An embodiment into which the components are integrated or an embodiment in which some components are separated is included in the scope of the present disclosure as long as it does not depart from the essence of the present disclosure.

In addition, the following embodiments are provided to more clearly explain to a person having average knowledge in the art, and the shapes and sizes of components in the drawings may be exaggerated for clearer explanation.

Hereinafter, preferred embodiments according to the present disclosure will be described with reference to the accompanying drawings.

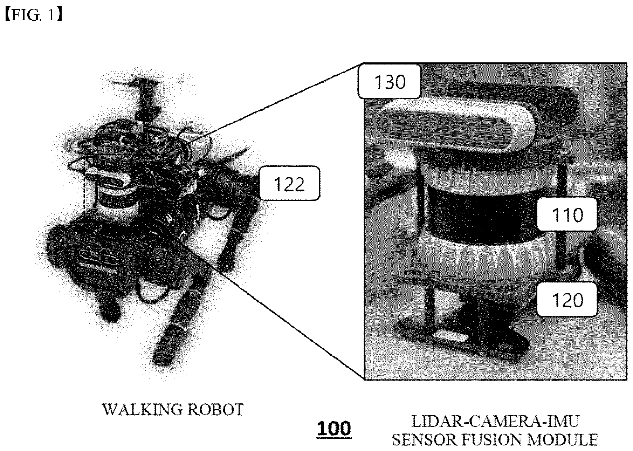

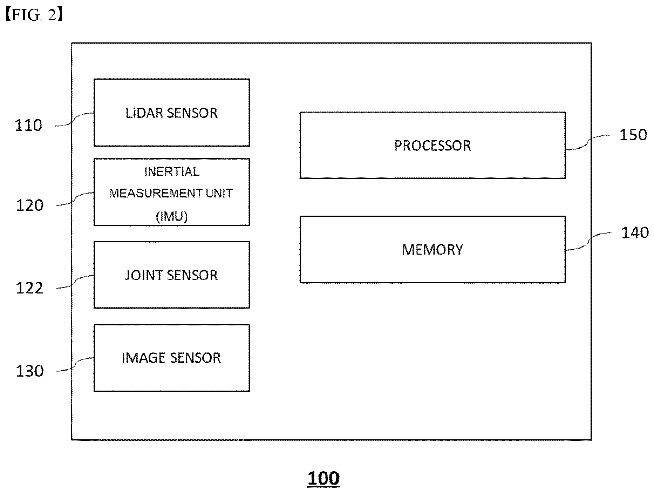

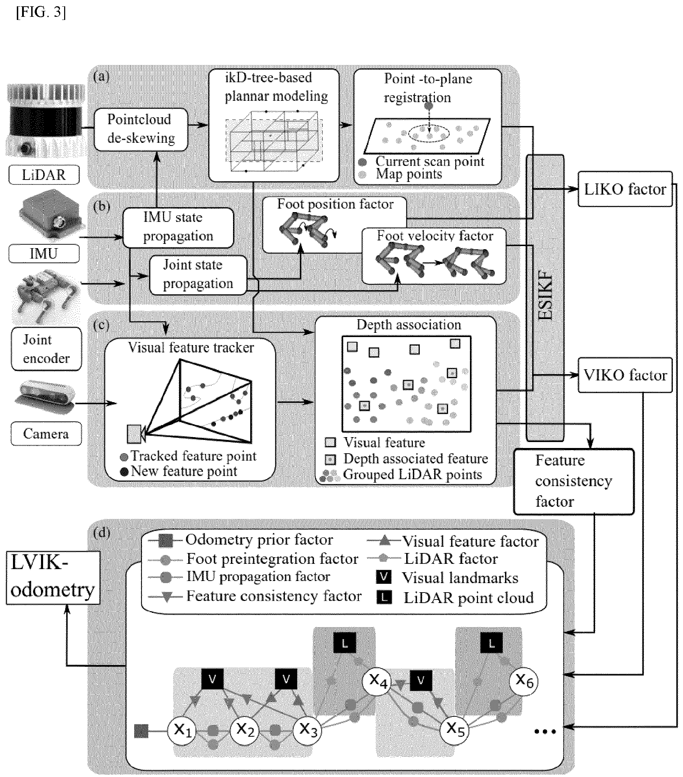

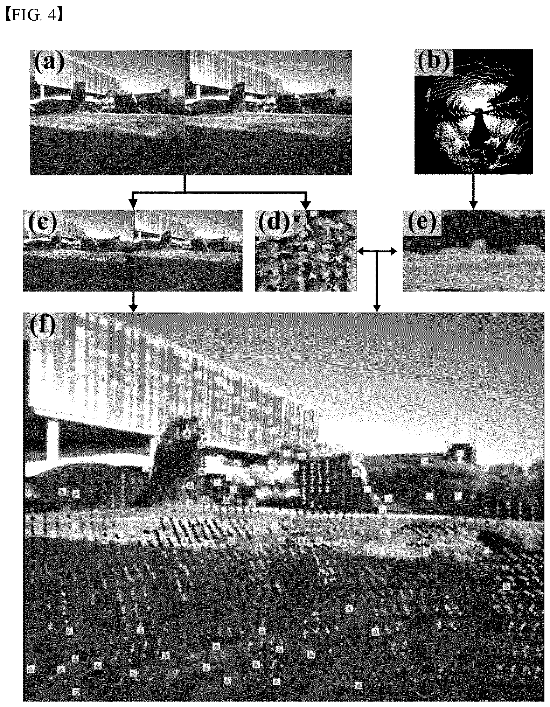

FIG. 1 is a diagram illustrating a walking robot and sensors mounted thereon according to an embodiment of the present disclosure. FIG. 2 is a block diagram illustrating a configuration of the walking robot according to an embodiment of the present disclosure. FIG. 3 is a diagram for describing a pose estimation process of the walking robot according to an embodiment of the present disclosure. FIG. 4 is a diagram illustrating a process of calculating a feature consistency factor.

Referring to FIGS. 1 to 4, a walking robot 100 according to an embodiment of the present disclosure is, for example, a quadruped walking robot, which is able to move on various terrains in indoor and outdoor environments. The walking robot 100 may include a LiDAR sensor 110, an inertial measurement unit (IMU) 120, a joint sensor 122, an image sensor 130, a memory 140, and a processor 150. Here, the image sensor 130 may be an image sensor such as a stereo camera, and the joint sensor 122 may be attached to legs of the walking robot 100 to measure an angle between links constituting the respective legs.

The walking robot 100 may enable the walking robot 100 pose estimation method by processing and fusing measurement data from the LiDAR sensor 110, the IMU 120, the joint sensor 122, and the image sensor 130 to generate an accurate three-dimensional (3D) map from pose estimation in a 3D space.

When the pose of the walking robot 100 is estimated based only on the image sensor 130 and the IMU 120, the pose accuracy of the walking robot 100 may be lowered due to the low quantity and quality of visual features in the ambient environment. Here, the visual features are identified from an image captured by a camera, and for example, a visual feature point at which the color is rapidly changed from white to black in the image. The visual feature may be extracted by applying, for example, a filter, to the image. In this regard, well-known techniques from the related art may be applied.

The memory 140 includes one or more computer-readable instructions. The data measured from the LiDAR sensor 110, the IMU 120, the joint sensor 122, and the image sensor 130 may also be stored in the memory 140. In addition, the processor 150 may estimate the pose of the walking robot 100 by processing the instructions stored in the memory 140. Hereinafter, the pose walking robot estimation process 100 shown in FIGS. 3 and 4 may be understood as being performed by the processor 150.

The overall structure shown in FIG. 3, which is a framework using an error state iterative Kalman filter (ESIKF), shows a consistent and integrated framework of visual-inertial-LiDAR-leg odometry. The framework is divided into a visual-inertial-kinematic odometry (VIKO) module and a LiDAR-inertial-kinematic odometry (LIKO) module. Both modules are fused into one framework that fuses all proprioceptive and exteroceptive sensors.

The VIKO module may include an operation to correct depth information through LiDAR-visual depth association based on visual feature extraction and super pixel clustering techniques.

In addition, the LIKO module may utilize an optimization technique through point-to-plane registration and position factors of leg and foot of the walking robot 100, leveraging the leg kinematics pre-integration technology, in the ESIKF framework.

The framework may largely include three main elements. First, FIG. 3(a) shows the process of managing LiDAR sensor 110 data through iKD-tree-based planar modeling and sliding window point-to-plane registration. FIG. 3(b), which is for calculating a kinematic factor, shows kinematic factor construction by utilizing joint state propagation and optimize the current pose of the walking robot 100 by using a pre-integrated foot measurement value. FIG. 3(c) shows a process of integrating visual factors by including a visual features and depth consistency factor derived from the point cloud data of the LiDAR sensor 110.

Referring to FIG. 3(a), the LIKO module may process scan data received from the LiDAR sensor 110 and match the scan data with a map collected during operation through iKD-tree-based planar modeling. In the initial state, the state of the walking robot 100 may be propagated and recorded by using measurement data from the IMU 120. During the scanning process, each point has its own measurement time and need to be skewed to the current time. The recorded propagated states may be used to obtain the position of the points at the current time. Thereafter, the current pose in the world frame may be obtained using a combination between the IMU 120 propagation and optimization of the LiDAR sensor 110 data.

The point cloud optimization process utilizes a sliding window to estimate the walking robot 100 pose from previous LiDAR sensor 110 data within a sliding window range during the data collecting process, rather than updating the walking robot 100 state only based on the recent LiDAR sensor 110 data. Through this, it is possible to prevent the possibility of divergence during pose estimation in an environment where features may be unsuitable.

Referring to FIG. 3(b), the foot position factor and a foot velocity factor calculation of the walking robot 100 is shown. To this end, a foot pre-integration technique may be used to obtain the factors. Each foot pose, velocity, and uncertainty from the noise of the walking robot 100 may be calculated. Here, the foot velocity factor of the walking robot 100 may be calculated using a kinematic-based pre-integration method. Additionally, the uncertainty of the foot velocity may be calculated through a body velocity estimation technique calculated through the combination of IMU 120, joint sensor 122, and walking robot 100 controller. The foot position factor of the walking robot 100 may be calculated using the kinematic-based pre-integration technique from the reference point of the corresponding state. Specifically, the factor may be calculated through pre-integration of the robot foot pose from the previous time until the current time. Additionally, the uncertainty of the foot pose may be calculated through the pre-integration result and forward kinematics. Here, the forward kinematics refers to a technique of calculating the foot position through joint sensor data with respect to the pose of the walking robot 100.

Hereinafter, a process of calculating the kinematic factor of the walking robot 100 is described in detail.

First, the kinematic factor of the leg of the walking robot 100 may be calculated as in Equation 1 below from measured values of the joint sensor 122 and the IMU 120 mounted on the walking robot 100. Here, Equation 1 below is an equation for estimating i+1 information (rotation and position) based on i-th information. [Equation 1] $\begin{matrix}{\hat{Ψ}}_{l , i + 1} = {\hat{Ψ}}_{l , i} Exp \left({\hat{ω}}_{l , i}^{f}-{n}_{{ω}_{l , i}}\right) Δ t , \\ {\hat{S}}_{l , i + 1} = {\hat{S}}_{l , i} + {\hat{Ψ}}_{l , i} \left({\hat{v}}_{l , i}^{f}-{n}_{{v}_{l , i}}\right) Δ t\end{matrix}$
ψ̂*_{l,i}* : Estimated rotation value of the l-th leg at time i
Ŝ*_{l,i}* : Estimated position of the l-th leg at the time i
${\hat{ω}}_{l , i}^{f}$ : Foot angular velocity of the l-th leg at the time i
${\hat{v}}_{l , i}^{f}$ : Foot linear velocity of the l-th leg at the time i
*n_{ω_{l,i}}*: Noise of the foot angular velocity
*n_{v_{l,i}}*: Noise of the foot linear velocity

In the ideal case, the foot position calculated from propagated measurement model and the forward kinematics of the most recent state should align with each other.

Equation 2 shows the construction of forward kinematics factor of the walking robot 100 that calculates the difference between latest foot position and propagated foot position from previous time to the current time in the world frame. [Equation 2] ${r}_{{s}_{i}} = {R}_{i}^{ω} {Γ}_{p} \left(α\left(t\right)\right) + {P}_{i}^{ω} - {\hat{S}}_{l , i}$

Here,
*r_{Sᵢ}*: Forward kinematics residual
${R}_{i}^{ω} , {P}_{i}^{ω}$: Estimated position and rotation of the l-th leg at the time i
T*ₚ*(*α*(*t*)): Forward kinematics calculation
Ŝ*_{l,i}*: Propagated foot position of the l-th leg to the time i
*n_{ω_{l,i}}*: Noise of the foot angular velocity
*n_{v_{l,i}}*: Noise of the foot linear velocity

Next, in Equation 3 below, with the kinematic information is used, covariance is calculated to estimate the reliability of the corresponding factor. The covariance of the pre-integrated measured value of the foot position of the walking robot 100 may be used as an additional weight for optimization of the LIKO module. [Equation 3] $\begin{matrix}{Ω}_{{s}_{i + 1}} = {AΩ}_{{S}_{i}} {A}^{T} + {AΩ}_{{n}_{v}} {A}^{T} \\ A = \left[I{ψ}_{l , i}{\left[{\hat{v}}_{l , i}^{f}\right]}_{x}Δt\right] , \\ B = \left[-{ψ}_{l , i} Δt\right] ,\end{matrix}$

Here,
Ω_{*S*ᵢ₊₁}: Foot position covariance
Ω*_{nᵥ}*: Joint sensor noise
*ψ_{l,i}*: Rotation value of the l-th leg at the time i
${\hat{v}}_{l , i}^{f}$: Estimated foot linear velocity of the l-th leg at the time i

Finally, in Equation 4 below, the rotation value and the position calculated from the measured values of the IMU 120 and the rotation value and the position calculated from the kinematic measured values should ideally align with each other, but the residual thereof is calculated, and thus, the degree of slipping of foot of the walking robot 100 may be calculated and considered.

Finally, in equation 4 below, the foot pre-integration factor construction is shown by calculating the estimated rotational and translational difference of the walking robot 100 foot based on pre-integration technique that is robust to slippage conditions. [Equation 4] $\begin{matrix}{r}_{{v}_{{R}_{i}}} \left({υ}_{ij}, {χ}_{k}\right) = Log \left(Δ{\hat{Ψ}}_{ij}^{T}{ΔΨ}_{ij}\right) , \\ {r}_{{v}_{{P}_{i}}} \left({υ}_{ij ,}{χ}_{k}\right) = Δ {S}_{ij} - Δ {\hat{s}}_{ij}\end{matrix}$

Here,
${r}_{{v}_{{R}_{i}}} \left({υ}_{ij}, {χ}_{k}\right)$: Pre-integrated angular velocity residual
${r}_{{v}_{{P}_{i}}} \left({ν}_{ij}, {χ}_{k}\right)$*:* Pre-integrated translational velocity residual
*Δψᵢⱼ*: Foot rotational difference from the time I to time j
Δ*Sᵢⱼ*: Foot translational difference from the time I to the time j

Next, a process of calculating the depth consistency factor (or a feature consistency factor) is described with reference to FIG. 3(c) in the framework. FIG. 4(a) shows an image obtained by the stereo camera 130 which is an image sensor. FIG. 4(b) shows data obtained by the LiDAR sensor 110. FIG. 4(c) shows the result of tracking visual features in an image by using fast corner detection and KLT-based optical flow estimation( 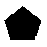 represents a partially tracked visual feature, ● represents a tracked visual feature, and ☆ represents a tracked visual feature on the right image). FIG. 4(d) shows a result of classification of pixel units in an image by using super pixel algorithm. FIG. 4(e) shows a result of projecting a LiDAR point cloud into a range image at the camera image frame for LiDAR-image sensor fusion. Finally, FIG. 4(f) shows a result of point cloud grouping using the result of FIG. 4(d) and FIG. 4(e) with successful visual feature depth correction in FIG. 4(c). In the present embodiment, visual features depth information may be corrected by calculating a normal distribution transform (NDT)-based data distribution according to each point set. Here, rectangular boxes with triangles indicate successfully corrected feature points, while rectangular boxes without triangles indicate uncorrected feature points. The symbol(●) represents a grouped point cloud based on the results of the superpixel algorithm shown in 4(d).

In the present embodiment, a well-known visual feature pipeline that manages the image sensor 130, such as managing a series of key frames including stereo images captured by a stereo camera, may be used. A fast corner detector and a KLT optical flow tracker may be used to detect and track visual features in all the key frames. A stereo re-projection error between a tracked point and the corresponding visual feature point may be used.

Referring back to FIG. 3, the fusion and optimization process of VIKO and LIKO module factors is shown in FIG. 3(d). In the present embodiment, the VIKO and LIKO module are alternately used according to the available measurement value from LiDAR sensor or camera. Both VIKO and LIKO module factors are combined using an ESIKF framework. Thus, a maximum-a-posterior (MAP) estimation may be obtained. Here, the MAP estimation refers to a process of finding a parameter that maximizes the posterior probability given available information from measured data.

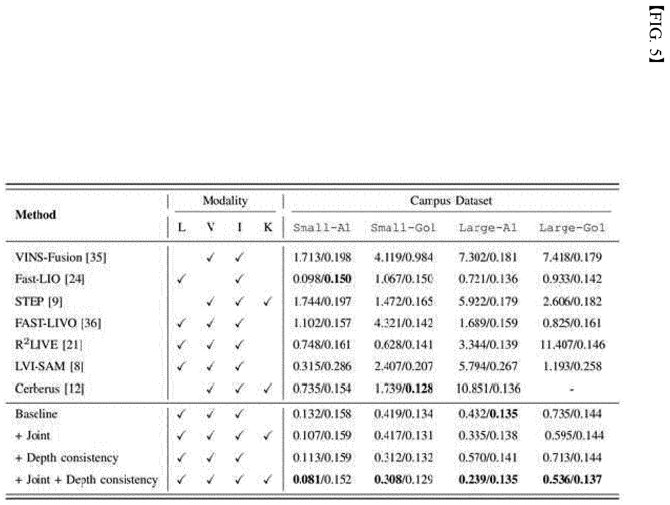

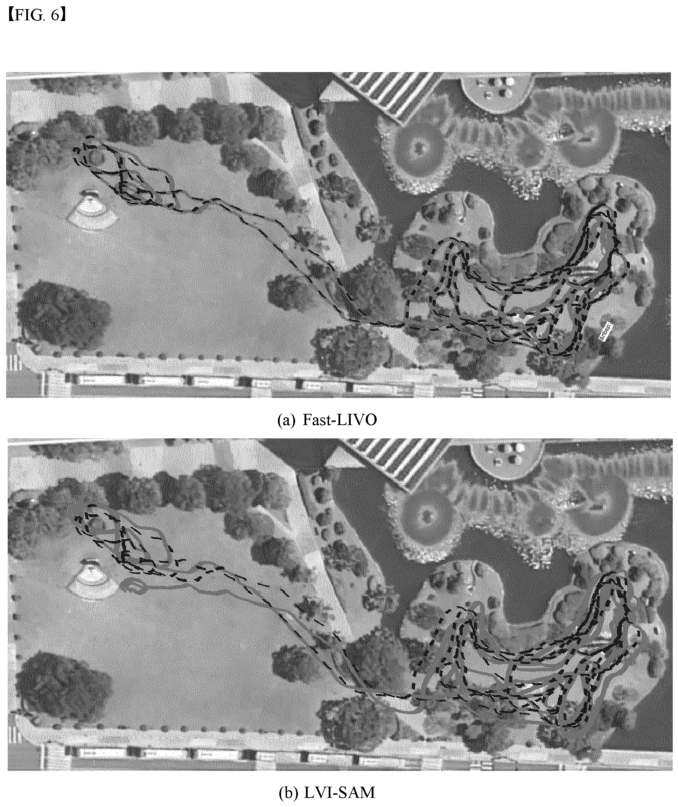

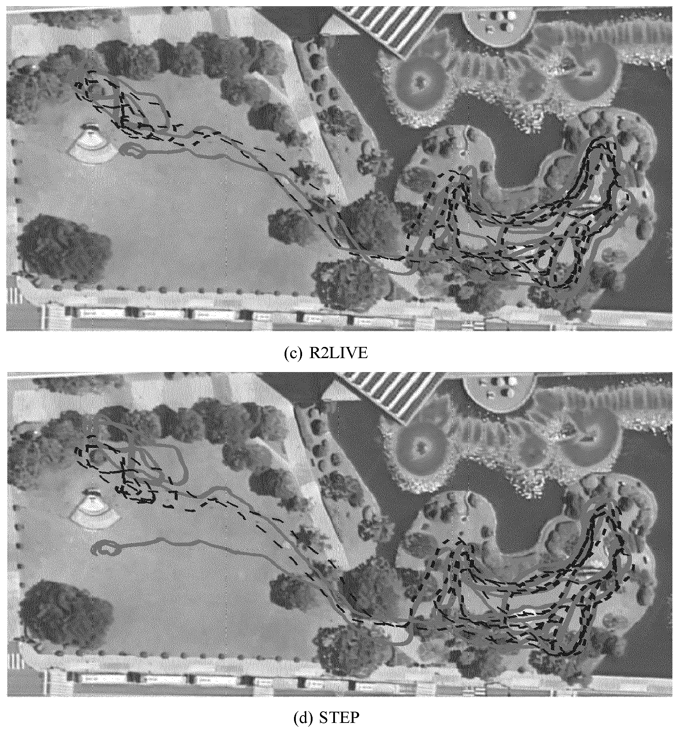

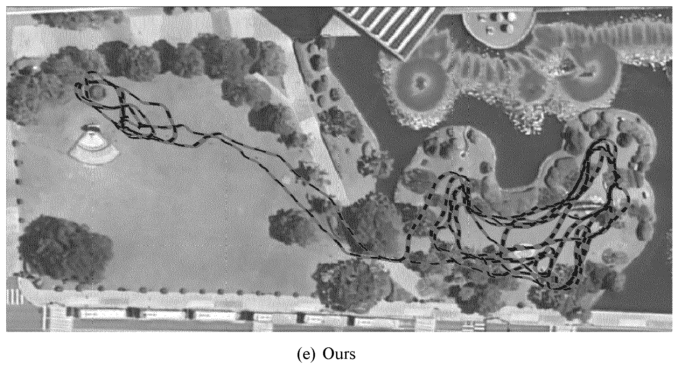

FIG. 5 is a diagram illustrating quantitative test results related to the accuracy of pose estimation from the walking robot pose estimation method according to an embodiment of the present disclosure and other methods. FIG. 6 is a diagram illustrating qualitative test result of pose estimation from the walking robot pose estimation method on a map according to an embodiment of the present disclosure and other methods.

Referring to FIG. 5, the proposed method has been tested in various datasets including long trajectories and complex courses. Here, the presented results from the datasets show absolute trajectory error (APE) and a relative pose error (RPE) (unit: m) for a quadruped walking robot. The letters L, V, I, and K represent the modalities used: LiDAR, visual sensor, IMU, and kinematic information, respectively.

Since there is currently no publicly available dataset including joint information for walking robots, Korea Advanced Institute of Science and Technology (KAIST) campus datasets were manually collected. The datasets used in this test include Small-A1 and Large-A1 sequences obtained by a Unitree A1 robot, and Small-Go1 and Large-Go1 sequences obtained by a Unitree Go1 robot. In addition, the terms small and large means environments with total trajectory length less than 750 m and more than 750 m, respectively. In addition, the resulting path accuracy has been quantitatively evaluated by using a RTK-GPS trajectory as a reference. In the evaluation, a comparative analysis has been performed with respect to available ground truth information by using the APE and the RPE. The APE calculates the absolute error of each estimated pose with respect to the measured pose with nearest timestamp. The RPE calculates the movement error between successive timestamps.

A comparative analysis was conducted to evaluate the pose estimation results of several open-source methods, including VINS-Fusion, R2LIVE, LVI-SAM, STEP, Cerberus, Fast-LIO, and Fast-LIVO, against the proposed walking robot pose estimation algorithm, as described in an embodiment of the present disclosure.

As shown in FIG. 5, the walking robot pose estimation method according to an embodiment of the present disclosure shows the lowest error compared to other algorithms. This is due to the tightly-coupled approach that minimizes the mismatch between a stereo camera and LiDAR measurement. R2LIVE, Fast-LIVO, and LVI-SAM show significant pose errors due to the accumulation of inaccurately placed points in a large-scale environment. Fast-LIO shows a larger pose error in large-scale scene compared to small-scale scene. On the other hand, VINS-Fusion, using only visual measurements, shows severe drift due to lighting or external errors which results in loss of tracking or incorrect depth estimation. Cerberus and STEP additionally include kinematic information in a visual sensor, but show significant performance degradation in large-scale scenes. The test results show the greater durability, robustness, and generalization ability of the proposed pose estimation method on various platforms by confirming the robustness and generalization ability of the walking robot pose estimation method according to an embodiment of the present disclosure.

Referring to FIG. 6, the test results of various robot pose estimation methods through a real dataset are shown. FIGS. 6(a) to 6(d) show the results of the accuracy of robot pose estimation of other related technology. FIG. 6(e) shows the walking robot pose estimation method according to an embodiment of the present disclosure. In each figure, the dashed path represents RTK-GPS-based path of the robot. On the other hand, the line paths represent the walking path of the walking robot based on the estimation result of each algorithm. The walking robot pose estimation method, as illustrated in the figure, minimizes the mismatch between the stereo camera and LiDAR sensor data by mutually correcting the estimation results from the heterogeneous sensors. This approach ensures highly stable estimation results in indoor environments, open spaces, and long-distance operations.

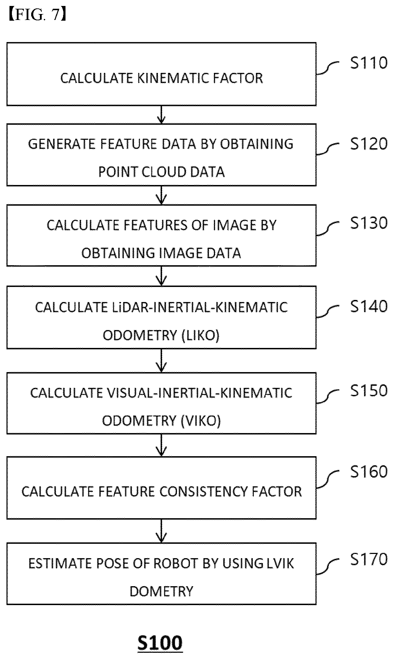

FIG. 7 is a flowchart illustrating the walking robot pose estimation method according to an embodiment of the present disclosure.

Referring to FIG. 7, in the walking robot 100 pose estimation method (S100) according to an embodiment of the present disclosure, operation S110 is the construction of kinematic factor considering the kinematic dynamics of the walking robot 100 by utilizing measurement data from IMU 120 mounted on the walking robot 100 and the joint sensor 122. Here, the kinematic factor may include the calculation of poses and velocities of the walking robot 100 foot based on measurement data of the IMU 120 and the joint sensor 122 mounted on the walking robot 100. Here, the pose and velocities of the walking robot 100 foot may be calculated using the pre-integration method of the walking robot 100 foot pose from the previous time to the current time. In addition, to improve the accuracy of the poses and velocities of the walking robot 100 foot, the pre-integration method may simultaneously include the calculation of foot velocity uncertainty based on the estimated body velocity from measurement data by the IMU 120.

In addition, in operation S120, LiDAR feature may be generated from the obtained point cloud data captured in the environment from the LiDAR sensor 120 mounted on the walking robot 100. Here, a sliding-window point cloud optimization technique may be used to improve the stability of the estimation results.

In operation S130, Image data, capturing the environment scene, may be obtained from the image sensor 130 such as a stereo camera in order to extract the visual features. For example, the visual features from the captured image may be extracted through fast corner detection and KLT-based optical flow estimation.

Next, in operation S140, a LIKO factor may be calculated by fusing the feature from point cloud data obtained from the LiDAR sensor 110 with a kinematic factor.

Next, in operation S150, a VIKO factor may be calculated by fusing the kinematic factor with the visual feature obtained in the image from the image sensor 130.

Next, in operation S160, pixel classification with respect to the image color may be generated based on a super pixel algorithm. Consequently, a feature consistency factor to correct depth information of the visual feature from the image data may be calculated based on the projected point cloud data to the image frame and classified from the super pixel algorithm result.

In operation S170, the walking robot 100 pose may be estimated by fusing the LIKO factor, the VIKO factor, and the feature consistency factor.

An electronic device or terminal that performs the embodiments of the walking robot pose estimation method described above may include a processor, memory for executing program data, permanent storage such as a disk drive, a communication port for connecting to an external device, a user interface device, and other components. In addition, other related general-purpose components related to the present embodiment may also be included. At least one processor unit is needed. In addition, the processor may operate one or more software modules generated by the program code stored and executed in the memory. The processor may execute the program code stored in the memory. Methods implemented in the software algorithm may be stored on a computer-readable memory as computer-readable codes or program instructions that is executable on the processor.

According to the walking robot and the pose estimation method thereof of the embodiment described above, accurate walking robot pose estimation is possible by using a strong-coupling method that considers the mutual feature information obtained by various sensors which are robust to long-distance walking of the walking robot, such as LiDAR, image, inertial, joint, and other sensors.

In addition, more precise pose estimation is possible by calculating the distribution of LiDAR data grouped from the super pixel-based method and a 3D planar model to reduce the depth estimation error of visual features utilized in feature consistency factor.

In addition, it is possible to prevent the possibility of pose estimation divergence in an environment where LiDAR features are weak through sliding window-based optimization technique.

## Claims

1. A pose estimation method of a walking robot (100), the pose estimation method comprising:
calculating a kinematic factor of the walking robot (100) comprising positions and velocities of a leg and foot of the walking robot (100) considering data measured by an inertial measurement unit (IMU, 120) and a joint sensor (122) mounted on the walking robot (100) while the walking robot (100) is moving and kinetic dynamics;
obtaining point cloud data with respect to a space where the walking robot (100) is located by using a LiDAR sensor (110) mounted on the walking robot (100); and
obtaining image data with respect to the space where the walking robot (100) is located by using an image sensor (130) mounted on the walking robot (100), **characterized by** performing a data fusion operation comprising:
independently optimizing:
(i) a LiDAR-inertial-kinematic odometry factor, LIKO factor, by fusing the kinematic factor with feature data of the point cloud data of the LiDAR sensor (110), wherein the feature data are generated by sliding window-based point cloud optimization over a plurality of LiDAR frames; and
(ii) a visual-inertial-kinematic odometry factor, VIKO factor, by fusing the kinematic factor with feature data of the image data of the image sensor (130), wherein the VIKO factor includes a depth consistency factor calculated based on superpixel-based classification of the image data and projection of the point cloud data of the LiDAR sensor (110) onto an image frame to correct depth information of visual features, and
estimating the pose of the walking robot (100) by subsequently fusing the independently optimized LIKO factor and the VIKO factor.

2. The pose estimation method of claim 1, wherein the positions and velocities of the leg and foot of the walking robot (100) are calculated through pre-integration from positions of the leg and foot of the walking robot (100) at a previous time to positions of the leg and foot of the walking robot (100) at a current time.

3. The pose estimation method of claim 2, further comprising generating feature data using sliding-window point cloud optimization from the point cloud data of the LiDAR sensor (110), wherein the positions and velocities of the leg and foot of the walking robot (100) are calculated by determining the uncertainty of the foot velocity based on a body velocity derived from data measured by the IMU (120) of the walking robot (100), and considering a calculation result of the pre-integration and the value of the uncertainty.

4. The pose estimation method of claim 3, further comprising extracting features of an image through fast-corner detection and Kanade-Lucas-Tomasi (KLT)-based optical flow estimation based on the image data from the image sensor (130).

5. The pose estimation method of claim 4, wherein classification images of pixel units with respect to the image data are generated based on a super pixel algorithm,
a feature consistency factor of correcting depth information of features of the image data is calculated based on data of the classification images of pixel units and data in which the point cloud data from the LiDAR sensor (110) is projected in a range of an image frame of the image data, and the position of the walking robot (100) is estimated by additionally considering the feature consistency factor.

6. A walking robot (100) comprising:
an image sensor (130);
an inertial measurement unit (IMU (120));
a joint sensor (122);
a LiDAR sensor (110);
a memory (140) comprising one or more computer-readable instructions; and
a processor (150) configured to process the instructions to perform pose estimation of the walking robot (100),
wherein the processor (150) is configured to calculate a kinematic factor of the walking robot (100) comprising positions and velocities of a leg and foot of the walking robot (100) considering data measured by the IMU (120) and the joint sensor (122) mounted on the walking robot (100) while the walking robot (100) is moving and kinetic dynamics, obtain point cloud data with respect to a space where the walking robot (100) is located by using the LiDAR sensor (110) mounted on the walking robot (100), obtain image data with respect to the space where the walking robot (100) is located by using the image sensor (130) mounted on the walking robot (100), **characterized in that** the processor (150) is further configured to perform a data fusion operation by independently optimizing a LiDAR-inertial-kinematic odometry factor, LIKO factor, by fusing the kinematic factor with feature data of the point cloud data of the LiDAR sensor (110), the feature data being generated by sliding window-based point cloud optimization over a plurality of LiDAR frames; and a visual-inertial-kinematic odometry factor, VIKO factor, by fusing the kinematic factor with feature data of the image data of the image sensor (130), and estimating the pose of the walking robot (100) by subsequently fusing the independently optimized LIKO factor and the VIKO factor,
wherein the VIKO factor includes a depth consistency factor calculated based on superpixel-based classification of the image data and projection of the point cloud data of the LiDAR sensor (110) onto an image frame to correct depth information of visual features.

7. The walking robot (100) of claim 6, wherein the calculating of the kinematic factor includes calculating positions and velocities of a leg and foot of the walking robot (100) based on data of a joint sensor (122) mounted on the walking robot (100) together with the IMU (120).

8. The walking robot (100) of claim 7, wherein the positions and velocities of the leg and foot of the walking robot (100) are calculated through pre-integration from positions of the leg and foot of the walking robot (100) at a previous time to positions of the leg and foot of the walking robot (100) at a current time.

9. The walking robot (100) of claim 8, wherein the positions and velocities of the leg and foot of the walking robot (100) are calculated by calculating uncertainty of the velocity of the foot based on a body velocity based on data measured by the IMU (120) of the walking robot (100), and considering a calculation result of the pre-integration and a value of the uncertainty.

10. The walking robot (100) of claim 6, wherein the processor (150) is configured to generate feature data by using sliding-window point cloud optimization from the point cloud data of the LiDAR sensor (110).

11. The walking robot (100) of claim 10, wherein the processor (150) is configured to extract features of an image through fast-corner detection and Kanade-Lucas-Tomasi (KLT)-based optical flow estimation based on the image data from the image sensor (130).

12. The walking robot (100) of claim 6, wherein the processor (150) is configured to:
generate classification images of pixel units with respect to the image data based on a super pixel algorithm,
calculate a feature consistency factor of correcting depth information of features of the image data based on data of the classification images of pixel units and data in which the point cloud data from the LiDAR sensor (110) is projected in a range of an image frame of the image data; and
estimate the position of the walking robot (100) by additionally considering the feature consistency factor.

## Patentansprüche

1. Verfahren zur Posenschätzung eines Gehroboters (100), wobei das Posenschätzungsverfahren umfasst:
Berechnen eines kinematischen Faktors des Gehroboters (100) umfassend Positionen und Geschwindigkeiten eines Beins und Fußes des Gehroboters (100) unter Berücksichtigung von Daten, die von einer inertialen Messeinheit (IMU, 120) und einem Gelenksensor (122), die an dem Gehroboter (100) angebracht sind, gemessen werden, während sich der Gehroboter (100) bewegt, und der kinetischen Dynamik;
Erhalten von Punktwolkendaten in Bezug auf einen Raum, in dem sich der Gehroboter (100) befindet, unter Verwendung eines LiDAR-Sensors (110), der an dem Gehroboter (100) angebracht ist; und
Erhalten von Bilddaten in Bezug auf den Raum, in dem sich der Gehroboter (100) befindet, unter Verwendung eines Bildsensors (130), der an dem Gehroboter (100) angebracht ist, **gekennzeichnet durch** das Durchführen eines Datenfusionsvorgangs umfassend:
unabhängiges Optimieren:
(i) eines LiDAR-Inertial-Kinematik-Odometrie-Faktors, LIKO-Faktors, durch Fusionieren des kinematischen Faktors mit Merkmalsdaten der Punktwolkendaten des LiDAR-Sensors (110), wobei die Merkmalsdaten durch eine auf einem gleitenden Fenster basierende Punktwolkenoptimierung über eine Vielzahl von LiDAR-Frames erzeugt werden, und
(ii) eines visuellen Inertial-Kinematik-Odometrie-Faktors, VIKO-Faktors, durch Fusionieren des kinematischen Faktors mit Merkmalsdaten der Bilddaten des Bildsensors (130), wobei der VIKO-Faktor einen Tiefenkonsistenzfaktor umfasst, der basierend auf einer superpixelbasierten Klassifizierung der Bilddaten und einer Projektion der Punktwolkendaten des LiDAR-Sensors (110) auf einen Bildframe berechnet wird, um Tiefeninformationen visueller Merkmale zu korrigieren, und
Schätzen der Pose des Gehroboters (100) durch anschließendes Fusionieren des unabhängig optimierten LIKO-Faktors und des VIKO-Faktors.

2. Posenschätzungsverfahren nach Anspruch 1, wobei die Positionen und Geschwindigkeiten des Beins und Fußes des Gehroboters (100) durch Vorintegration aus Positionen des Beins und Fußes des Gehroboters (100) zu einem früheren Zeitpunkt zu Positionen des Beins und Fußes des Gehroboters (100) zu einem aktuellen Zeitpunkt berechnet werden.

3. Posenschätzungsverfahren nach Anspruch 2, das ferner das Erzeugen von Merkmalsdaten unter Verwendung einer Gleitfenster-Punktwolkenoptimierung aus den Punktwolkendaten des LiDAR-Sensors (110) umfasst, wobei die Positionen und Geschwindigkeiten des Beins und Fußes des Gehroboters (100) durch Bestimmen der Unsicherheit der Fußgeschwindigkeit basierend auf einer Körpergeschwindigkeit, die aus Daten abgeleitet wird, die durch die IMU (120) des Gehroboters (100) gemessen werden, und Berücksichtigen eines Berechnungsergebnisses der Vorintegration und des Wertes der Unsicherheit berechnet werden.

4. Posenschätzungsverfahren nach Anspruch 3, das ferner das Extrahieren von Merkmalen eines Bildes durch FAST-Eckendetektion und einer auf Kanade-Lucas-Tomasi (KLT) basierenden Schätzung des optischen Flusses basierend auf den Bilddaten von dem Bildsensor (130) umfasst.

5. Posenschätzungsverfahren nach Anspruch 4, wobei Klassifizierungsbilder von Pixeleinheiten in Bezug auf die Bilddaten basierend auf einem Superpixel-Algorithmus erzeugt werden,
ein Merkmalskonsistenzfaktor zum Korrigieren von Tiefeninformationen von Merkmalen der Bilddaten basierend auf Daten der Klassifizierungsbilder von Pixeleinheiten und von Daten berechnet wird, in denen die Punktwolkendaten des LiDAR-Sensors (110) in einen Bereich eines Bildrahmens der Bilddaten projiziert sind, und die Position des Gehroboters (100) unter zusätzlicher Berücksichtigung des Merkmalskonsistenzfaktors geschätzt wird.

6. Gehroboter (100), umfassend:
einen Bildsensor (130);
eine inertiale Messeinheit (IMU (120));
einen Gelenksensor (122);
einen LiDAR-Sensor (110);
einen Speicher (140), der eine oder mehrere computerlesbare Anweisungen umfasst; und
einen Prozessor (150), der dazu konfiguriert ist, die Anweisungen zu verarbeiten, um eine Posenschätzung des Gehroboters (100) durchzuführen,
wobei der Prozessor (150) dazu konfiguriert ist, einen kinematischen Faktor des Gehroboters (100) umfassend Positionen und Geschwindigkeiten eines Beins und Fußes des Gehroboters (100) unter Berücksichtigung von Daten, die von der IMU (120) und dem Gelenksensor (122), die an dem Gehroboter (100) angebracht sind, gemessen werden, während sich der Gehroboter (100) bewegt, und der kinetischen Dynamik zu berechnen, Punktwolkendaten in Bezug auf einen Raum zu erhalten, in dem sich der Gehroboter (100) befindet, unter Verwendung des LiDAR-Sensors (110), der an dem Gehroboter (100) angebracht ist, Bilddaten in Bezug auf den Raum zu erhalten, in dem sich der Gehroboter (100) befindet, unter Verwendung des Bildsensors (130), der an dem Gehroboter (100) angebracht ist, **dadurch gekennzeichnet, dass** der Prozessor (150) ferner dazu konfiguriert ist, eine Datenfusion durchzuführen durch das unabhängige Optimieren eines LiDAR-Inertial-Kinematik-Odometrie-Faktors, LIKO-Faktors, durch Fusionieren des kinematischen Faktors mit Merkmalsdaten der Punktwolkendaten des LiDAR-Sensors (110), wobei die Merkmalsdaten durch eine auf einem gleitenden Fenster basierende Punktwolkenoptimierung über eine Vielzahl von LiDAR-Frames erzeugt sind; und eines visuellen Inertial-Kinematik-Odometrie-Faktors, VIKO-Faktors, durch Fusionieren des kinematischen Faktors mit Merkmalsdaten der Bilddaten des Bildsensors (130) und Schätzen der Pose des Gehroboters (100) durch anschließendes Fusionieren des unabhängig optimierten LIKO-Faktors und des VIKO-Faktors,
wobei der VIKO-Faktor einen Tiefenkonsistenzfaktor umfasst, der basierend auf einer superpixelbasierten Klassifizierung der Bilddaten und einer Projektion der Punktwolkendaten des LiDAR-Sensors (110) auf einen Bildframe berechnet wird, um Tiefeninformationen visueller Merkmale zu korrigieren.

7. Gehroboter (100) nach Anspruch 6, wobei das Berechnen des kinematischen Faktors das Berechnen von Positionen und Geschwindigkeiten eines Beins und Fußes des Gehroboters (100) basierend auf Daten eines Gelenksensors (122) umfasst, der an dem Gehroboter (100) zusammen mit der IMU (120) angebracht ist.

8. Gehroboter (100) nach Anspruch 7, wobei die Positionen und Geschwindigkeiten des Beins und Fußes des Gehroboters (100) durch Vorintegration aus Positionen des Beins und Fußes des Gehroboters (100) zu einem früheren Zeitpunkt zu den Positionen des Beins und Fußes des Gehroboters (100) zu einem aktuellen Zeitpunkt berechnet werden.

9. Gehroboter (100) nach Anspruch 8, wobei die Positionen und Geschwindigkeiten des Beins und Fußes des Gehroboters (100) durch Bestimmen der Unsicherheit der Fußgeschwindigkeit basierend auf einer Körpergeschwindigkeit, die auf Daten basiert, die durch die IMU (120) des Gehroboters (100) gemessen werden, und Berücksichtigen eines Berechnungsergebnisses der Vorintegration und des Wertes der Unsicherheit berechnet werden.

10. Gehroboter (100) nach Anspruch 6, wobei der Prozessor (150) dazu konfiguriert ist, Merkmalsdaten durch Verwenden einer auf einem gleitenden Fenster basierenden Punktwolkenoptimierung aus den Punktwolkendaten des LiDAR-Sensors (110) zu erzeugen.

11. Gehroboter (100) nach Anspruch 10, wobei der Prozessor (150) dazu konfiguriert ist, Merkmale ein**e**s Bildes durch FAST-Eckendetektion und einer auf Kanade-Lucas-Tomasi (KLT) basierenden Schätzung des optischen Flusses basierend auf den Bilddaten von dem Bildsensor (130) zu extrahieren

12. Gehroboter (100) nach Anspruch 6, wobei der Prozessor (150) dazu konfiguriert ist,
Klassifizierungsbilder von Pixeleinheiten in Bezug auf die Bilddaten basierend auf einem Superpixel-Algorithmus zu erzeugen,
einen Merkmalskonsistenzfaktor zum Korrigieren von Tiefeninformationen von Merkmalen der Bilddaten basierend auf Daten der Klassifizierungsbilder von Pixeleinheiten und von Daten zu berechnen, in denen die Punktwolkendaten von dem LiDAR-Sensor (110) in einen Bereich eines Bildrahmens der Bilddaten projiziert sind, und
die Position des Gehroboters (100) unter zusätzlicher Berücksichtigung des Merkmalskonsistenzfaktors zu schätzen.

## Revendications

1. Procédé d'estimation de pose d'un robot marcheur (100), le procédé d'estimation de pose comprenant :
calculer un facteur cinématique du robot marcheur (100) comprenant des positions et des vitesses d'une jambe et d'un pied du robot marcheur (100), en tenant compte de données mesurées par une unité de mesure inertielle (IMU, 120) et un capteur d'articulation (122) montés sur le robot marcheur (100) pendant que le robot marcheur (100) se déplace, et de la dynamique cinétique ;
obtenir des données de nuage de points concernant un espace où se trouve le robot marcheur (100), au moyen d'un capteur LiDAR (110) monté sur le robot marcheur (100) ; et
obtenir des données d'image concernant l'espace où se trouve le robot marcheur (100), au moyen d'un capteur d'image (130) monté sur le robot marcheur (100), **caractérisé par** la réalisation d'une opération de fusion de données comprenant :
optimiser indépendamment :
(i) un facteur d'odométrie LiDAR-inertielle-cinématique, facteur LIKO, en fusionnant le facteur cinématique avec des données de caractéristiques des données de nuage de points du capteur LiDAR (110), dans lequel les données de caractéristiques sont générées par une optimisation de nuage de points basée sur une fenêtre glissante sur une pluralité de trames LiDAR ; et
(ii) un facteur d'odométrie visuelle-inertielle-cinématique, facteur VIKO, en fusionnant le facteur cinématique avec des données de caractéristiques des données d'image du capteur d'image (130), dans lequel le facteur VIKO comprend un facteur de cohérence de profondeur calculé sur la base d'une classification des données d'image basée sur des superpixels et d'une projection des données de nuage de points du capteur LiDAR (110) sur une trame d'image afin de corriger des informations de profondeur de caractéristiques visuelles, et
estimer la pose du robot marcheur (100) en fusionnant ensuite le facteur LIKO et le facteur VIKO optimisés indépendamment.

2. Procédé d'estimation de pose selon la revendication 1, dans lequel les positions et les vitesses de la jambe et du pied du robot marcheur (100) sont calculées par préintégration depuis des positions de la jambe et du pied du robot marcheur (100) à un instant précédent jusqu'à des positions de la jambe et du pied du robot marcheur (100) à un instant courant.

3. Procédé d'estimation de pose selon la revendication 2, comprenant en outre la génération de données de caractéristiques au moyen d'une optimisation de nuage de points basée sur une fenêtre glissante à partir des données de nuage de points du capteur LiDAR (110), dans lequel les positions et les vitesses de la jambe et du pied du robot marcheur (100) sont calculées en déterminant l'incertitude de la vitesse du pied sur la base d'une vitesse du corps dérivée de données mesurées par l'IMU (120) du robot marcheur (100), et en tenant compte d'un résultat de calcul de la préintégration et de la valeur de l'incertitude.

4. Procédé d'estimation de pose selon la revendication 3, comprenant en outre l'extraction de caractéristiques d'une image par une détection de coins FAST et une estimation de flux optique basée sur Kanade-Lucas-Tomasi (KLT), sur la base des données d'image provenant du capteur d'image (130).

5. Procédé d'estimation de pose selon la revendication 4, dans lequel des images de classification d'unités de pixels concernant les données d'image sont générées sur la base d'un algorithme de superpixels,
un facteur de cohérence des caractéristiques destiné à corriger des informations de profondeur de caractéristiques des données d'image est calculé sur la base de données des images de classification d'unités de pixels et de données dans lesquelles les données de nuage de points provenant du capteur LiDAR (110) sont projetées dans les limites d'une trame d'image des données d'image, et la position du robot marcheur (100) est estimée en tenant en outre compte du facteur de cohérence des caractéristiques.

6. Robot marcheur (100) comprenant :
un capteur d'image (130) ;
une unité de mesure inertielle (IMU (120)) ;
un capteur d'articulation (122) ;
un capteur LiDAR (110) ;
une mémoire (140) comprenant une ou plusieurs instructions lisibles par ordinateur ; et
un processeur (150) configuré pour traiter les instructions afin d'effectuer une estimation de pose du robot marcheur (100),
dans lequel le processeur (150) est configuré pour calculer un facteur cinématique du robot marcheur (100) comprenant des positions et des vitesses d'une jambe et d'un pied du robot marcheur (100), en tenant compte de données mesurées par l'IMU (120) et le capteur d'articulation (122) montés sur le robot marcheur (100) pendant que le robot marcheur (100) se déplace, et de la dynamique cinétique, obtenir des données de nuage de points concernant un espace où se trouve le robot marcheur (100) au moyen du capteur LiDAR (110) monté sur le robot marcheur (100), et obtenir des données d'image concernant l'espace où se trouve le robot marcheur (100) au moyen du capteur d'image (130) monté sur le robot marcheur (100), **caractérisé en ce que** le processeur (150) est en outre configuré pour réaliser une opération de fusion de données en optimisant indépendamment un facteur d'odométrie LiDAR-inertielle-cinématique, facteur LIKO, par fusion du facteur cinématique avec des données de caractéristiques des données de nuage de points du capteur LiDAR (110), les données de caractéristiques étant générées par une optimisation de nuage de points basée sur une fenêtre glissante sur une pluralité de trames LiDAR ; et un facteur d'odométrie visuelle-inertielle-cinématique, facteur VIKO, par fusion du facteur cinématique avec des données de caractéristiques des données d'image du capteur d'image (130), et en estimant la pose du robot marcheur (100) en fusionnant ensuite le facteur LIKO et le facteur VIKO optimisés indépendamment,
dans lequel le facteur VIKO comprend un facteur de cohérence de profondeur calculé sur la base d'une classification des données d'image basée sur des superpixels et d'une projection des données de nuage de points du capteur LiDAR (110) sur une trame d'image afin de corriger des informations de profondeur de caractéristiques visuelles.

7. Robot marcheur (100) selon la revendication 6, dans lequel le calcul du facteur cinématique comprend le calcul de positions et de vitesses d'une jambe et d'un pied du robot marcheur (100) sur la base de données d'un capteur d'articulation (122) monté sur le robot marcheur (100) conjointement avec l'IMU (120).

8. Robot marcheur (100) selon la revendication 7, dans lequel les positions et les vitesses de la jambe et du pied du robot marcheur (100) sont calculées par préintégration depuis des positions de la jambe et du pied du robot marcheur (100) à un instant précédent jusqu'à des positions de la jambe et du pied du robot marcheur (100) à un instant courant.

9. Robot marcheur (100) selon la revendication 8, dans lequel les positions et les vitesses de la jambe et du pied du robot marcheur (100) sont calculées en calculant une incertitude de la vitesse du pied sur la base d'une vitesse du corps basée sur des données mesurées par l'IMU (120) du robot marcheur (100), et en tenant compte d'un résultat de calcul de la préintégration et d'une valeur de l'incertitude.

10. Robot marcheur (100) selon la revendication 6, dans lequel le processeur (150) est configuré pour générer des données de caractéristiques au moyen d'une optimisation de nuage de points basée sur une fenêtre glissante à partir des données de nuage de points du capteur LiDAR (110).

11. Robot marcheur (100) selon la revendication 10, dans lequel le processeur (150) est configuré pour extraire des caractéristiques d'une image par une détection de coins FAST et une estimation de flux optique basée sur Kanade-Lucas-Tomasi (KLT), sur la base des données d'image provenant du capteur d'image (130).

12. Robot marcheur (100) selon la revendication 6, dans lequel le processeur (150) est configuré pour :
générer des images de classification d'unités de pixels concernant les données d'image sur la base d'un algorithme de superpixels ;
calculer un facteur de cohérence des caractéristiques destiné à corriger des informations de profondeur de caractéristiques des données d'image sur la base de données des images de classification d'unités de pixels et de données dans lesquelles les données de nuage de points provenant du capteur LiDAR (110) sont projetées dans les limites d'une trame d'image des données d'image ; et
estimer la position du robot marcheur (100) en tenant en outre compte du facteur de cohérence des caractéristiques.
